# EUROPÄISCHE PATENTSCHRIFT

(11) **EP 1 137 562 B1**
(45) Veröffentlichungstag und Bekanntmachung des Hinweises auf die Patenterteilung: **14.05.2003**
(21) Anmeldenummer: 99962215.2
(22) Anmeldetag: 03.12.1999
(51) Int. Cl.: B60T 8/40

(54) **SCHWINGUNGSDÄMPFER ZUR DÄMPFUNG VON FLÜSSIGKEITSSCHWINGUNGEN IN EINEM HYDRAULISCHEN SYSTEM**
VIBRATION DAMPER FOR DAMPING FLUID VIBRATIONS IN A HYDRAULIC SYSTEM
AMORTISSEUR DE VIBRATIONS POUR L'AMORTISSEMENT DES VIBRATIONS D'UN FLUIDE DANS UN SYSTEME HYDRAULIQUE

(30) Priorität: 09.12.1998 DE 19856697
(43) Veröffentlichungstag der Anmeldung: 04.10.2001
(73) Patentinhaber: ZF FRIEDRICHSHAFEN Aktiengesellschaft, 88038 Friedrichshafen (DE)
(72) Erfinder: GIERER, Georg, D-88079 Kressbronn (DE); HOLDENRIED, Willy, D-88090 Immenstaad (DE); REMMLINGER, Hubert, D-88046 Friedrichshafen (DE); MAYR, Karlheinz, D-88142 Wasserburg (DE); KIEBLER, Herbert, D-88069 Tettnang (DE)
(86) Internationale Anmeldenummer: EP9909492
(87) Internationale Veröffentlichungsnummer: WO00034096

(56) Entgegenhaltungen:
- DE-A- 19 524 921
- DE-A- 19 538 615
- DE-A- 19 539 779

## Beschreibung

Die Erfindung betrifft einen Schwingungsdämpfer zur Dämpfung von Flüssigkeitsschwingungen in einem hydraulischen System, insbesondere in einem hydraulischen Regelkreis für ein Kraftfahrzeug-Getriebe mit einem elastisch verformbaren Dämpferelement.

Schwingungsdämfper der vorgenannten Art werden in Kraftfahrzeuggetrieben zur Einstellung des Regeldrucks in den Ventilen sowie zum Dämpfen von Flüsssigkeitsschwingungen eingesetzt. Die Dämpferelemente werden dabei üblicherweise aus einem Elastomer hergestellt und sind somit bei Belastungsänderung durch unterschiedliche Flüssigkeitsdrükke elastisch verformbar.

Ein derartiger Schwingungsdämpfer ist beispielsweise aus der DE 195 24 921 A1 bekannt. Diese beschreibt einen Schwingungsdämpfer mit einer Membran, welche als hohlzylindrisches Formteil aus einem Elastomer hergestellt ist. Beim Versagen eines derart bekannten Elastomerdämpfers, beispielsweise bei einer Leckage durch Bersten der Membran, führt dies meist zum Versagen des gesamten Schwingungsdämpfers. Dadurch sinkt auch der Regeldruck in dem hydraulischen System und das Getriebe ist nicht mehr regelbar, was zunächst zu einem Ausfall des Getriebes und letztlich zum Liegenbleiben des Fahrzeugs führen kann.

Ein Schwingungsdämpfer auch dem Oberbegriff des Anspruchs 1 ist aus DE-A-195 38 615 bekannt.

Aufgabe der vorliegenden Erfindung ist es daher, einen Druckabfall an dem Schwingungsdämpfer bei Beschädigung des Dämpferelements zu verhindern, so daß ein Getriebeausfall und dadurch ein Liegenbleiben eines Fahrzeugs verhindert wird.

Diese Aufgabe wird erfindungsgemäß dadurch gelöst, daß bei einem gattungsgemäßen Schwingungsdämpfer das Gehäuse eine Druckausgleichsöffnung aufweist und daß der Schwingungsdämpfer ein Dichtelement enthält, welches beim Versagen des Dämpferelements die Druckausgleichsöffnung verschließt und somit die Funktion des hydraulischen Systems sicherstellt. Dadurch wird vorteilhafterweise eine Durchflußsperrfunktion erreicht, so daß beim Versagen des Dämpferelements ein Druckabfall in dem hydraulischen Regelkreis verhindert wird. Selbst bei einem defekten Dämpferelement bleibt somit die Funktion des Getriebes im wesentlichen erhalten und ein Liegenbleiben des Fahrzeugs wird vermieden. Bei einer möglichen Beanstandung der Schaltqualität, welche durch ein geborstenes Dämpferelement auftreten kann, ist somit lediglich das Dämpferelement auszutauschen.

Somit wird eine Lösung angegeben, welche während des normalen Betriebs des Schwingungsdämpfers, d. h. das Dämpferelement weist kein Leck auf und gleicht durch elastische Verformung die Schwingungen des Flüssigkeitsdrucks aus, die Druckausgleichsöffnung geöffnet hält, so daß ein Druckausgleich der beiden Räume vor und hinter dem Dichtelement stattfindet und daß durch Ausdehnung des Dämpferelements das aus dem vorderen Raum verdrängte Luftvolumen durch die Druckausgleichsöffnung entweichen kann. Dabei sind die Räume vor und hinter dem Dichtelement in Strömungsrichtung von der Drossel zur Druckausgleichsöffnung hin definiert.

In einer Weiterbildung wird vorgeschlagen, das Dichtungselement und/oder das Dämpferelement in der Ausnehmung beweglich anzuordnen. Dadurch ergeben sich vorteilhafterweise mehrere Möglichkeiten in der Ausgestaltung der beiden wesentlichen Elemente des Schwingungsdämpfers.

In einer vorteilhaften Ausbildung der Erfindung wird vorgeschlagen, daß die Drossel und die Druckausgleichsöffnung im wesentlichen auf gegenüberliegenden Stirnseiten der Ausnehmung angeordnet sind und daß das Dichtelement nahe der Drossel und das Dämpferelement nahe der Druckausgleichsöffnung in der Ausnehmung vorgesehen ist.

Eine besonders vorteilhafte Ausbildung des Schwingungsdämpfers besteht darin, daß das Dichtelement als im wesentlichen zylindrischer Kolben und die Ausnehmung des Gehäuses als Kolbenbohrung ausgebildet und der Kolben axial verschiebbar in dieser Kolbenbohrung geführt ist. Der zylindrische Außenmantel des Kolbens dichtet dabei gegen die zylindrische Innenwand der Kolbenbohrung, so daß die beiden Räume vor und hinter den beiden Stirnseiten des Kolbens voneinander getrennt sind.

In einer Weiterbildung der Erfindung ist der Kolben auf mindestens einer Stirnseite mit einer Ausnehmung versehen, beispielsweise eine kegelförmige Bohrung, welche zur Zentrierung des Dämpferelements dient.

Das Dämpferelement selbst wird als Kugel ausgebildet, wobei der Durchmesser der Kugel kleiner als der Durchmesser des Kolbens bzw. der Kolbenbohrung ist. Dadurch wird die Kugel vorteilhafterweise in der kegelförmigen Bohrung auf der einen Stirnseite des Kolbens zentriert.

Der Kolben sowie das ihn umgebende Gehäuse bestehen aus Werkstoffen mit im wesentlichen gleichen Wärmeausdehnungs-Koeffizienten, so daß auch bei einer möglichen Erwärmung des Schwingungsdämpfer die Dichtfunktion zwischen Kolben und Kolbenbohrung vorteilhafterweise gewährleistet ist.

Der Kolben ist vorteilhafterweise aus einem Kunststoff, insbesondere Ryton oder auch aus einem ähnlichen Werkstoff und das Gehäuse aus Aluminium oder einem ähnlichen Werkstoff hergestellt.

Das Dämpferelement dagegen ist aus einem Elastomer, insbesondere NBR oder einem ähnlichen Werkstoff hergestellt und weist somit eine vorteilhafte Dämpfungscharakteristik auf.

In einer weiteren Ausbildung der Erfindung wird vorgeschlagen, das Dämpferelement nahe der Drossel und das Dichtelement nahe der Druckausgleichsöffnung in der Ausnehmung anzuordnen. Somit kann vorteilhafterweise eine gegenüber der vorher beschriebenen Ausbildungsform umgekehrte Anordnung der beiden Elemente vorgenommen werden.

Vorteilhaft ist ferner, wenn das Dämpferelement als ein im wesentlichen hohlzylindrisches und elastisch verformbares Bauteil ausgebildet und mit einer im wesentlichen offenen und einer geschlossenen Stirnseite zur Aufnahme der Flüssigkeit im Innenraum des Dämpferelements versehen ist. Das Dichtelement ist im wesentlichen als kreisscheiben-, kreisring-, platten-, kegel-, kalottenförmiges oder ähnlich geformtes Bauteil ausgebildet und es ist vorteilhafterweise an der Außenseite des geschlossenen Endes des Dämpferelements angeordnet.

Bei Ausbildung des Dichtelements in Kegel- oder Kalottenform weist die Öffnung vorteilhafterweise in Richtung zur offenen Stirnseite des Dämpferelements und somit zur Drossel hin, so daß im Fall des Berstens des Dämpferelements und einem Austreten der druckbeaufschlagten Flüssigkeit aus dem Dämpferelement eine wirksame Abdichtung durch das Dichtelement erfolgt.

In einer Weiterbildung weist das Dichtelement an seinem radial äußeren Rand eine im wesentlichen umlaufende Dichtlippe auf, welche während des normalen Betriebs des Dämpferelements nahezu vollständig an der Innenwand der Ausnehmung anliegt und die Ausnehmung, in Strömungsrichtung gesehen, in einen Raum vor und hinter der Dichtlippe unterteilt.

In einer weiteren Ausbildung des Dichtelements ist die Dichtlippe elliptisch ausgeformt, so daß diese bei im wesentlichen zylindrischer Ausbildung der Innenwandung der Ausnehmung konstruktiv vorgegebene Durchlaßöffnungen zwischen der Dichtlippe und der Innenwand bildet.

In einer weiteren besonders vorteilhaften Ausbildung des Dichtelements ist die Dichtlippe im wesentlichen kreisringförmig ausgebildet und der Durchmesser der Dichtlippe ist im nicht eingebauten Zustand des Dämpferelementes größer als der Innendurchmesser der im wesentlichen zylindrischen Ausnehmung. Dadurch wird sichergestellt, daß die Dichtlippe im eingebauten Zustand mit Vorspannung an der Innenwand der Ausnehmung anliegt.

Damit ein Druckausgleich der beiden Räume der Ausnehmung vor und hinter der Dichtlippe stattfinden kann, ist diese mit wenigstens einem Durchlaß versehen.

Der Durchlaß ist vorteilhafterweise so ausgebildet und die Elastizität der Dichtlippe derart gewählt, daß die Dichtlippe im Versagensfall, beispielsweise durch Bersten des Dämpferelements, durch den einseitig anstehenden Flüssigkeitsdruck in dem Raum vor der Dichtlippe eine umlaufende Dichtung mit der den Dämpfer umgebenden Innenwand der Ausnehmung bildet. Somit wird eine einfache Lösung vorgeschlagen, welche sicherstellt, daß nach dem Bersten des Dämpferelements die Dichtlippe zuverlässig an die Innenwand der Ausnehmung angepreßt wird und dadurch die Druckausgleichsöffnung verschließt. Die Dämpfungswirkung geht dabei zwar in erheblichem Maße verloren, jedoch kann der Regeldruck in dem Schwingungsdämpfer gehalten werden, so daß der Versagensfall des Schwingungsdämpfers nicht direkt zum Getriebeausfall führt.

In einer weiteren bevorzugten Ausgestaltung der Erfindung ist das Dichtelement als elastische, im wesentlichen kreisscheibenförmige Platte ausgebildet und mit dem Dämpferelement zentrisch verbunden.

Dabei ist das Dichtelement derart ausgeformt, daß dieses während des normalen Betriebs des Schwingungsdämpfers die Innenwand der Ausnehmung gerade nicht berührt, so daß der Raum vor dem Dichtelement mit dem Raum hinter dem Dichtelement verbunden ist. Damit kann im normalen Betriebszustand ein Druckausgleich zwischen den beiden Räumen vor und hinter dem Dichtelement stattfinden und das durch Ausdehnung des Dämpferelements aus dem vorderen Raum verdrängte Luftvolumen vorteilhafterweise durch die Druckausgleichsöffnung aus dem hinteren Raum entweichen.

Das Dichtelement selbst sowie die Anbindung des Dichtelements an das Dämpferelement ist derart ausgeführt, daß das Dichtelement im Versagensfall die Druckausgleichsöffnung verschließt. Dies kann beispielsweise dadurch geschehen, daß das zentrische und im Wesentlichen halsförmige Verbindungsstück zwischen dem Dämpferelement und dem Dichtelement durch den einseitig auf dem Dichtelement anstehenden Flüssigkeitsdruck derart verlängert wird, so daß das Dichtelement gegen eine Dichtfläche der Ausnehmung angepreßt wird.

Vorteilhafterweise ist das Dichtelement flexibel ausgebildet, so daß es mit seinem radial äußeren Bereich durch den einseitig anstehenden Flüssigkeitsdruck elastisch verformt und gegen eine ringförmige Dichtfläche der Ausnehmung angepreßt wird und somit die Druckausgleichsöffnung verschließt.

Das Dichtelement sowie das Dämpferelement können als separate Bauteile ausgebildet sein. Dabei ist der Austausch eines einzelnen defekten Bauteils sowie auch eine getrennte Herstellung der beiden Bauteile in unterschiedlichen Werkstoffen einfach möglich, so daß jedes Bauteil gemäß seiner Bestimmung als Dicht- bzw. Dämpferelement aus dem bestgeeignetsten Werkstoff herstellbar ist.

Alternativ sind jedoch das Dichtelement und das Dämpferelement auch einstückig herstellbar, beispielsweise aus einem Elastomer. Durch eine einstückige Ausbildung ist eine besonders kostengünstige Herstellung des Dicht- und des Dämpferelements vorgeschlagen.

Weitere Ziele, Merkmale, Vorteile und Anwendungsmöglichkeiten der Erfindung ergeben sich aus der nachfolgenden Beschreibung der Ausführungsbeispiele, die in den Zeichnungen näher dargestellt sind. Dabei bilden alle beschriebenen und/oder bildlich dargestellten Merkmale für sich oder in beliebiger sinnvoller Kombination den Gegenstand der Erfindung, unabhängig von ihrer Zusammenfassung in den Ansprüchen und deren Rückbeziehung.
Es zeigen:
- Fig. 1: ein Schwingungsdämpfer mit einem im wesentlichen hohlzylindrischen Dämpferelement und einem kalottenförmigen Dichtelement im Längsschnitt,
- Fig. 2: den Schwingungsdämpfer gemäß Fig. 1 im Querschnitt entlang einer Linie 2-2 in Fig. 1,
- Fig. 3: einen Schwingungsdämpfer ähnlich der Darstellung in Fig. 1, jedoch alternativ mit einem plattenförmigen Dichtelement im Längsschnitt sowie
- Fig. 4: einen Schwingungsdämpfer in einer alternativen Ausbildungsform mit einem Dichtkolben sowie einem kugelförmigen Dämpferelement.

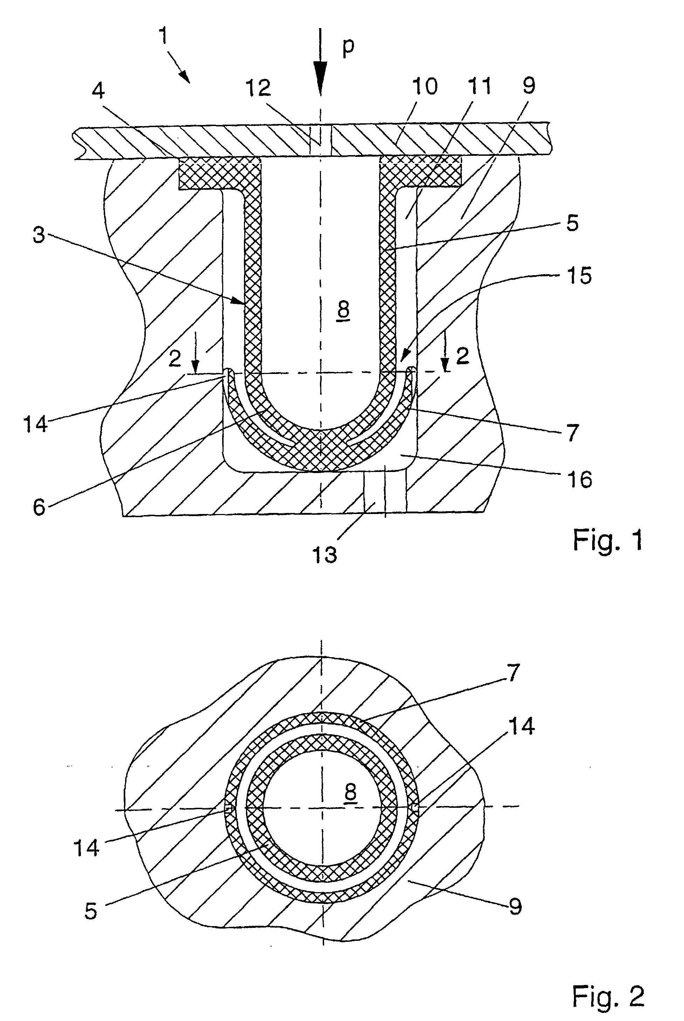

Eine erste Ausbildungsform eines Schwingungsdämpfers 1 (Fig. 1, Fig. 2) besteht im wesentlichen aus einem Dämpferelement 3 mit einem Dichtelement 7, welche in eine Ausnehmung 11 eines Gehäuse 9, beispielsweise eines Kraftfahrzeug-Getriebes, eingesetzt sind. Das Dämpferelement 3 wird gebildet durch ein im wesentlichen hohlzylindrisches Mittelteil 5, das an seinem einen offenen Ende eine in etwa flanschringförmige Auflage 4 aufweist, welche durch einen Deckel 10 in dem Gehäuse 9 fixiert ist. An dem gegenüberliegenden Ende weist das Dämpferelement 3 einen im wesentlichen kalottenförmigen geschlossenen Boden 6 auf und begrenzt somit den in etwa zylindrischen Innenraum 8 des Dämpferelements 3. Auf der Außenseite des Bodens 6 ist ein im wesentlichen kalottenförmiges Dichtelement 7 angeordnet, welches zentrisch mit dem Dämpferelement 3 verbunden ist.

Das Dämpferelement 3 ist mit radialem Abstand zur Innenwand der Ausnehmung 11 in diese eingesetzt, während das Dichtelement 7 insbesondere mit seiner radial äußeren Dichtlippe im Wesentlichen an der Innenwand der Ausnehmung 11 anliegt. In dem Deckel 10 ist eine Öffnung, beispielsweise in Form einer Drossel 12 vorgesehen, um eine mit dem Druck p beaufschlagte Flüssigkeit in den Innenraum 8 des Dämpferelements 3 einzubringen. An der, in Strömungsrichtung gesehen, gegenüberliegenden Stirnseite der Ausnehmung 11 ist eine Druckausgleichsöffnung 13, beispielsweise in Form einer Bohrung, vorgesehen. Bei Druckerhöhungen der Flüssigkeit im Innenraum 8 des Dämpferelements 3 während des normalen Betriebs des Dämpferelements dehnt sich das elastisch verformbare Mittelteil 5 nach außen und verkleinert somit das Volumen des Raums 15 oberhalb des Dichtelements 7. Das so aus dem Raum 15 verdrängte Volumen wird durch die beiden radial außen liegenden Durchlaßöffnungen 14 in der Dichtlippe 7 in den Raum 16 unterhalb der Dichtlippe gedrückt. Dadurch findet ein Druckausgleich zwischen den beiden Räumen 15 und 16 statt, wobei der Raum 16 durch die Druckausgleichsöffnung 13 mit der Umgebung verbunden ist. Die Durchlaßöffnungen 14 sind beispielsweise diametral in dem Dichtelement 7 angeordnet.

Wenn nun im Versagensfall, beispielsweise die Wandung des Mittelteils 5 des Dämpferelements 3 reißt oder birst, und die mit Druck beaufschlagte Flüssigkeit in den Raum 15 oberhalb des Dichtelements 7 eindringt, so entsteht durch die beiden klein dimensionierten Durchlaßöffnungen 14 der Dichtlippe eine turbulente Strömung, welche zum Anlegen der Dichtlippe 7 an der Innenwand der Ausnehmung 11 führt. Durch diese Sperrfunktion geht zwar einerseits die Dämpfungswirkung weitgehend verloren, jedoch kann andererseits der Regeldruck in dem Innenraum 8 des Dämpferelements 3 und somit auch in dem damit verbundenen hydraulischen Regelkreis gehalten werden, so daß ein Getriebeausfall vorteilhafterweise verhindert werden kann.

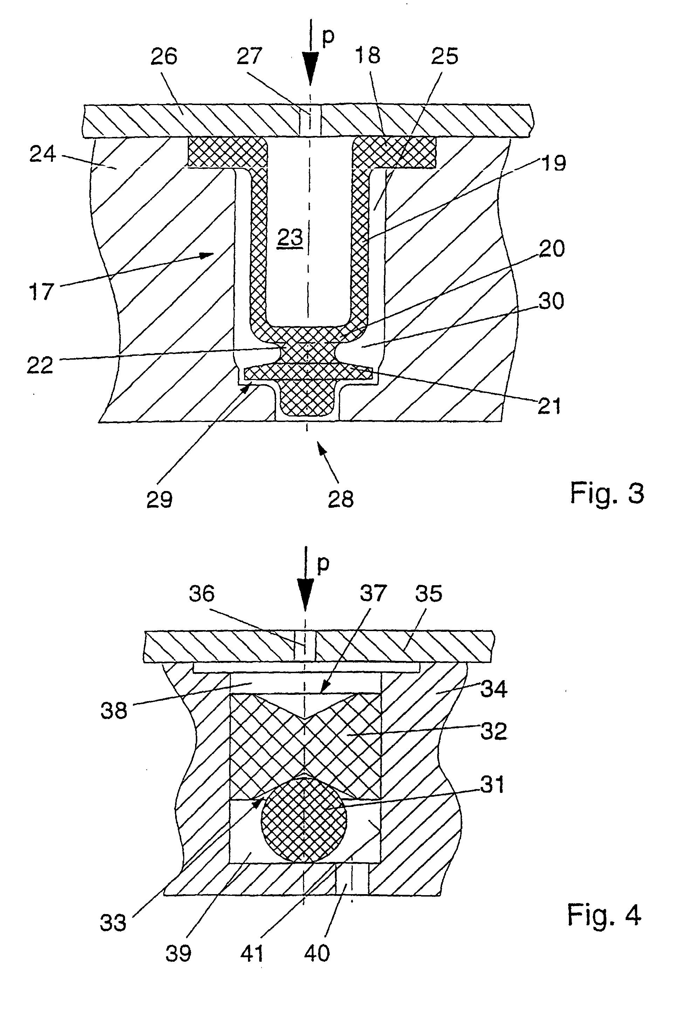

In einer alternativen Ausbildung (Fig. 3) entspricht das Dämpferelement 17 mit der Auflage 18 sowie dem Mittelteil 19 und dem Boden 20 im wesentlichen der Darstellung in Fig. 1. Dieses Dämpferelement 17 ist in eine Ausnehmung 25 eines Gehäuses 24 eingesetzt, wobei die Ausnehmung 25 an ihrem einen Ende mit einem Deckel 26 mit einer Drossel 27 und an dem gegenüberliegenden Ende mit einer Druckausgleichsöffnung 28 versehen ist.

Der wesentliche Unterschied der Ausbildung gemäß Fig. 3 zu der Darstellung in Fig. 1 besteht darin, daß das Dichtelement 21 als im wesentlichen kreisscheibenförmige Platte ausgebildet ist, welche mittels eines zentrisch angeordneten Halses 22 mit dem Boden 20 des Dämpferelements 17 verbunden ist. Das Dichtelement 21 ist dabei derart ausgebildet, daß es im eingebauten Zustand und während des normalen Betriebs des Dämpferelements 17, d. h. es ist noch kein Leck beispielsweise an dem Mittelteil 19 eingetreten, einen umlaufenden Spalt 29 zwischen dem Dichtelement 21 und der Innenwandung der Ausnehmung 25 aufweist. Somit wird eine Verbindung zum Druckausgleich zwischen dem Raum 30 oberhalb des Dichtelements 21 und der Druckausgleichsöffnung 28 hergestellt. Im Versagensfall, d. h. beispielsweise durch Bersten des Mittelteils 19 des Dämpferelements 17, findet eine Druckerhöhung in dem Raum 30 statt, wobei der radial äußere ringförmige Bereich des Dichtelements 21 gegen eine ebenfalls ringförmige Dichtfläche der Ausnehmung 25 in dem Gehäuse 24 angepreßt wird. Dadurch wird der Innenraum 23 des Dämpferelements 17 bzw. der Raum 30 gegen Atmosphäre verschlossen. Die Dämpfungswirkung des Dämpferelements 17 geht dabei zwar verloren, jedoch kann der Regeldruck in dem hydraulischen Regelkreis gehalten werden, wodurch ein Getriebeausfall verhindert wird.

In weiteren alternativen Ausbildung (Fig. 4) wird vorgeschlagen, das Dichtelement als im wesentlichen zylindrischen Kolben 32 auszubilden, welcher gegen die Innenwandung der Kolbenbohrung 41 in dem Gehäuse 34 dichtet. Der Kolben 32 wird einerseits über die Drossel 36 in dem Gehäusedeckel 35 mit Druck beaufschlagt, so daß der Kolben 32 sich in Richtung auf die Druckausgleichsöffnung 40 in der Ausnehmung 37 hin bewegt, wobei die Druckausgleichsöffnung 40 auf der der Drossel 36 gegenüberliegenden Stirnseite der Ausnehmung 37 angeordnet ist. In dem Raum 39, welcher sich in Strömungsrichtung gesehen hinter dem Kolben 32 befindet, ist ein Dämpferelement 31 in Form einer elastisch verformbaren Kugel angeordnet. Diese wird durch die kegelförmige Bohrung 33 auf einer Stirnseite des Kolbens 32 zentriert. Durch eine Druckbeaufschlagung des Raums 38, welcher sich in Strömungsrichtung gesehen vor dem Kolben 32 befindet, wird das Dämpferelement 31 in Abhängigkeit von dem anstehenden Flüssigkeitsdruck komprimiert. Das dadurch aus dem Raum 39 verdrängte Luftvolumen kann durch die Druckausgleichsöffnung 40 aus dem Gehäuse 34 entweichen.

Der Kolben 32 sowie das diesen umgebende Gehäuse 34 sind vorteilhafterweise aus Werkstoffen mit annähernd gleichem Wärmeausdehnungs-Koeffizient; d. h., der Kolben 32 ist vorteilhafterweise aus einem Kunststoff, insbesondere Ryton und das Gehäuse aus Aluminium hergestellt, so daß auch bei einer Erwärmung des Schwingungsdämpfers der Kolben 32 stets zuverlässig gegen die Kolbenbohrung 41 dichtet. Das kugelförmige Dämpferelement 31 ist vorteilhafterweise aus einem Elastomerwerkstoff, insbesondere NBR, hergestellt. In einem möglichen Versagensfall des Dämpferelements, daß beispielsweise der Elastomerwerkstoff des Dämpfers versprödet oder geborsten ist, geht somit einerseits die Dämpfungswirkung verloren; andererseits wird jedoch durch den Kolben 32 jederzeit eine Dichtfunktion des Schwingungsdämpfers gewährleistet, so daß auch hier der Regeldruck in dem hydraulischen Regelkreis gehalten werden kann und ein Getriebeausfall vermieden wird.

## Patentansprüche

1. Schwingungsdämpfer zur Dämpfung von Flüssigkeitsschwingungen in einem hydraulischen System, insbesondere in einem hydraulischen Regelkreis für ein Kraftfahrzeuggetriebe, mit einem elastisch verformbaren Dampferelement (3; 17; 31), welches in einer Ausnehmung (11; 25; 37) eines Gehäuses angeordnet ist und das Gehäuse (9; 24; 34) eine öffnung zur Zuführung einer druckbeaufschlagten Flüssigkeit zu dem Dämpferelement aufweist, **dadurch gekennzeichnet, daß** das Gehäuse (9; 24; 34) eine Druckausgleichsöffnung (13; 28; 40) aufweist und daß der Schwingungsdämpfer (1) ein Dichtelement (7; 21; 32) enthält, welches beim Versagen des Dämpferelements (3; 17; 31) die Druckausgleichsöffnung (13; 28; 40) verschließt und somit die Funktion des hydraulischen Systems sicherstellt.

2. Schwingungsdämpfer nach Anspruch 1, **dadurch gekennzeichnet, daß** die Öffnung zur Zuführung der druckbeaufschlagten Flüssigkeit zu dem Dämpferelement (3; 17; 31) als Drossel (12; 27; 36) ausgebildet ist.

3. Schwingungsdämpfer nach Anspruch 1 oder 2, **dadurch gekennzeichnet, daß** das Dichtelement (7; 21; 32) und/oder das Dämpferelement (3; 17; 31) in der Ausnehmung (11; 25; 37) beweglich angeordnet sind.

4. Schwingungsdämpfer nach Anspruch 1, 2 oder 3, **dadurch gekennzeichnet, daß** die Öffnung zur Zuführung der druckbeaufschlagten Flüssigkeit und die Druckausgleichsöffnung (13; 28; 40) im wesentlichen auf gegenüberliegenden Stirnseiten der Ausnehmung (11; 25; 37) angeordnet sind und das Dichtelement (32) nahe der Öffnung zur Zuführung der druckbeaufschlagten Flüssigkeit und das Dämpferelement (31) nahe der Druckausgleichsöffnung (40) in der Ausnehmung (37) vorgesehen ist.

5. Schwingungsdämpfer nach Anspruch 1, 2, 3 oder 4, **dadurch gekennzeichnet, daß** das Dichtelement im wesentlichen als zylindrischer Kolben (32) und die Ausnehmung (37) als Kolbenbohrung (41) ausgebildet und ein Kolben (32) axial verschiebbar in einer Kolbenbohrung (41) geführt ist und der zylindrische Außenmantel des Kolbens (32) gegen die zylindrische Innenwand der Kolbenbohrung (41) dichtet.

6. Schwingungsdämpfer nach Anspruch 5, **dadurch gekennzeichnet, daß** der Kolben (32) auf mindestens einer Stirnseite eine Ausnehmung (33) zur Zentrierung des Dämpferelements (31) aufweist.

7. Schwingungsdämpfer nach Anspruch 5 oder 6, **dadurch gekennzeichnet, daß** das Dämpferelement (31) als Kugel ausgebildet und der Durchmesser der Kugel kleiner als der Durchmesser des Kolbens (32) oder der Kolbenbohrung (41) ist.

8. Schwingungsdämpfer nach Anspruch 5, 6 oder 7, **dadurch gekennzeichnet, daß** der Kolben (32) und das Gehäuse (34) aus Werkstoffen mit im wesentlichen gleichen Wärmeausdehnungskoeffizienten bestehen.

9. Schwingungsdämpfer nach Anspruch 8, **dadurch gekennzeichnet, daß** der Kolben (32) aus einem Kunststoff und das Gehäuse (34) aus Aluminium besteht.

10. Schwingungsdämpfer nach einem der vorherigen Ansprüche, **dadurch gekennzeichnet, daß** das Dämpferelement (31) aus einem Elastomer besteht.

11. Schwingungsdämpfer nach Anspruch 1, 2 oder 3, **dadurch gekennzeichnet, daß** das Dämpferelement (3; 17) nahe der Öffnung zur Zuführung der druckbeaufschlagten Flüssigkeit und das Dichtelement (7; 21) nahe der Druckausgleichsöffnung (13; 28) in der Ausnehmung (11; 25) angeordnet ist.

12. Schwingungsdämpfer nach Anspruch 11, **dadurch gekennzeichnet, daß** das Dämpferelement (3; 17) ein im wesentlichen hohlzylindrisches, elastisch verformbares Bauteil (5; 19) mit einer im wesentlichen offenen und einer geschlossenen Stirnseite zur Aufnahme der Flüssigkeit im Innenraum (8; 23) des Dämpferelements (3; 17) aufweist und daß das Dichtelement (7; 21) als elastisches, im wesentlichen kreisscheiben-, kreisring-, platten-, kegel-, kalottenförmiges oder ähnlich geformtes Bauteil ausgebildet und im wesentlichen an der Außenseite des geschlossenen Endes des Dämpferelements (3; 17) angeordnet ist.

13. Schwingungsdämpfer nach Anspruch 12, **dadurch gekennzeichnet, daß** die kegel- oder kalottenförmige Öffnung des Dichtelements (7; 21) in Richtung zur offenen Stirnseite des Dämpferelements (3; 17) hin weist.

14. Schwingungsdämpfer nach Anspruch 12 oder 13, **dadurch gekennzeichnet, daß** das Dichtelement (7) an seinem radial äußeren Rand eine im wesentlichen umlaufende Dichtlippe aufweist, welche im Betrieb des Dämpferelements (3) an der Innenwand der Ausnehmung (11) anliegt und die Ausnehmung (11), in Strömungsrichtung von der Drossel (12) zur Druckausgleichsöffnung (13) gesehen, in je einen Raum (15; 16) vor und hinter der Dichtlippe (7) teilt.

15. Schwingungsdämpfer nach Anspruch 14, **dadurch gekennzeichnet, daß** die Dichtlippe eine elliptische Form aufweist.

16. Schwingungsdämpfer nach Anspruch 14, **dadurch gekennzeichnet, daß** die Dichtlippe (7) im wesentlichen kreisringförmig ausgebildet ist und der Außendurchmesser der Dichtlippe (7) im nicht eingebauten Zustand des Dämpferelements (3) größer ist als der Innendurchmesser der im wesentlichen zylindrischen Ausnehmung (11) und daß die Dichtlippe (7) wenigstens eine Durchlaßöffnung (14) zum Druckausgleich der beiden Räume (15; 16) der Ausnehmung (11) vor und hinter der Dichtlippe (7) aufweist.

17. Schwingungsdämpfer nach Anspruch 16, **dadurch gekennzeichnet, daß** der Durchlaß (14) so ausgebildet und die Elastizität der Dichtlippe (7) so gewählt ist, daß die Dichtlippe (7) im Versagensfall des Dämpferelements (3) durch den einseitig anstehenden Flüssigkeitsdruck (P) in dem Raum (15) vor der Dichtlippe (7) eine umlaufende Dichtung mit der das Dämpferelement (3) umgebenden Innenwand der Ausnehmung (11) bildet.

18. Schwingungsdämpfer nach Anspruch 11 oder 12, **dadurch gekennzeichnet, daß** das Dichtelement (21) als elastische, im wesentlichen kreisscheibenförmige Platte ausgebildet und mit dem Dämpferelement (17) zentrisch verbunden ist.

19. Schwingungsdämpfer nach Anspruch 18, **dadurch gekennzeichnet, daß** das Dichtelement (21) während des normalen Betriebs des Schwingungsdämpfers die Innenwand der Ausnehmung (25) nicht berührt, so daß der Raum (30), in Strömungsrichtung gesehen, vor dem Dichtelement (21) mit dem Raum hinter dem Dichtelement und der Druckausgleichsöffnung (28) in Verbindung steht und daß das Dichtelement (21) im Versagensfall durch den einseitig anstehenden Flüssigkeitsdruck die Druckausgleichsöffnung (28) verschließt, wobei das Dichtelement (21) wenigstens mit seinem radial äußeren Bereich elastisch verformbar und gegen eine ringförmige Dichtfläche der Ausnehmung (25) anpreßbar ist.

20. Schwingungsdämpfer nach einem der Ansprüche 1 bis 10, **dadurch gekennzeichnet, daß** das Dichtelement (32) und das Dämpferelement (31) als separate Bauteile ausgebildet sind.

21. Schwingungsdämpfer nach einem der Ansprüche 11 bis 19, **dadurch gekennzeichnet, daß** das Dichtelement (7; 21) einstückig mit dem Dämpferelement (3; 17) hergestellt ist.

## Claims

1. Vibration damper for dampening hydraulic fluid vibration within a hydraulic system, in particular within a hydraulic control circuit for a motor vehicle transmission, featuring an elastic, deformable damping element (3, 17, 31) arranged in a recess (11, 25, 37) of a housing, with the housing (9, 24, 34) featuring an inlet for feeding a compressed fluid to the damping clement, **characterized in that** the housing (9, 24, 34) features a pressure-equalization opening (13, 28, 40) and that the vibration damper (1) contains a sealing element (7, 21, 32) which in case of malfunctioning of the damping element (3, 17, 31) closes the pressure-equalization opening (13, 28, 40) and thus guarantees hydraulic system function.

2. Vibration damper according to claim 1, **characterized in that** the inlet for feeding a compressed fluid to the damping element (3, 17, 31) is designed as a throttle (12, 27, 36).

3. Vibration damper according to claim 1 or 2, **characterized in that** the sealing element (7, 21, 32) and / or the damping element (3, 17, 31) is / are movably arranged in the recess (11, 25, 37).

4. Vibration damper according to claim 1, 2, or 3, **characterized in that** the inlet for feeding a compressed fluid to the damping element and the pressure-equalization opening (13, 28, 40) are arranged roughly on opposing ends of the recess (11, 25, 37) and that the sealing element (32) is arranged in the recess (37) near the inlet for feeding the compressed fluid and the damping element (31) near the pressure-equalization opening (40).

5. Vibration damper according to claim 1, 2, 3 or 4, **characterized in that** the sealing element is largely designed as a cylindrical piston (32) and the recess (37) as a piston bore (41), and that a piston (32) is axially adjustably guided in a piston bore (41) and that the cylindrical outer wall of the piston (32) and the cylindrical inner wall of the piston bore (41) form a scaling interface.

6. Vibration damper according to claim 5, **characterized in that** the piston (32) on at least one end features a recess (33) for cantering the damping element (31).

7. Vibration damper according to claim 5 or 6, **characterized in that** the damping element (31) is a ball and the diameter of the ball is smaller than the diameter of the piston (32) or the piston bore (41).

8. Vibration damper according to claim 5,6 or 7, **characterized in that** the piston (32) and the housing (34) consist of materials of largely the same thermal expansion coefficient.

9. Vibration damper according to claim 8, **characterized in that** the piston (32) is made of plastic and the housing (34) of aluminum.

10. Vibration damper according to one of the preceding claims, **characterized in that** the damping element (31) consists of an elastomer.

11. Vibration damper according to claim 1, 2, or 3, **characterized in that** the damping element (3, 17) is arranged in the recess (11, 25) near the inlet for feeding the compressed fluid and the sealing element (7, 21) near the pressure-equalization opening (13, 28).

12. Vibration damper according to claim 11, **characterized in that** the damping element (3, 17) is largely a hollow, cylindrical, elastic, deformable component (5, 19) with one largely open and one closed end for feeding the fluid to the interior (8, 23) of the damping element (3, 17), and that the elastic sealing element (7, 21) is largely shaped as a circular disk, circular ring, plate, cone, sphere, or is a similarly shaped component, and is largely arranged on the exterior surface of the closed end of the damping element (3, 17).

13. Vibration damper according to claim 12, **characterized in that** the tapered or spherical opening of the sealing element (7, 21) faces the open end of the damping element (3, 17).

14. Vibration damper according to claim 12 or 13, **characterized in that** the sealing element (7) on its radial, outer edge features an essentially circumferential sealing lip which during operation of the damping element (3) abuts on the inner wall of the recess (11) and which separates the recess (11) in two spaces (15, 16), one before and one behind the sealing lip (7), seen in the direction of flow from the throttle (12) to the pressure-equalization opening (13).

15. Vibration damper according to claim 14, **characterized in that** the sealing lip is elliptic.

16. Vibration damper according to claim 14, **characterized in that** the sealing lip (7) largely has the shape of an annulus and that the outer diameter of the sealing lip (7) in the non-installed state of the damping element (3) is larger than the inner diameter of the largely cylindrical recess (11), and that the sealing lip (7) features at least one opening (14) for pressure equalization between the two spaces (15, 16) of the recess (11) before and behind the scaling lip (7).

17. Vibration damper according to claim 16, **characterized in that** the opening (14) is designed and the elasticity of the sealing lip (7) is chosen in such a way that in case of malfunction of the damping element (3), the sealing lip (7) - due to the unilateral fluid pressure (P) in the space (15) before the sealing lip (7) - forms a rotating seal with the recess inner wall which surrounds the damping element (3).

18. Vibration damper according to claim 11 or 12, **characterized in that** the sealing element (21) is designed as a plate largely of the shape of a circular disk and that it is concentrically linked to the damping element (17).

19. Vibration damper according to claim 18, **characterized in that** during normal operation of the vibration damper, the sealing element (21) does not touch the inner wall of the recess (25), so that - seen in the direction of flow - the space (30) before the sealing element (21) communicates with the space behind the sealing element and with the pressure-equalization opening (28), and that in case of failure, the sealing element (21) will close the pressure-equalization opening (28) due to the unilateral fluid pressure, with the sealing element (21) being elastically deformable at least on its outer radial area and capable of being pressed against a ring-shaped sealing surface of the recess (25).

20. Vibration damper according to one of the claims 1 through 10, **characterized in that** the scaling element (32) and the damping element (31) are separate components.

21. Vibration damper according to one of the claims 11 through 19, **characterized in that** the sealing element (7, 21) forms a single piece with the damping element (3, 17).

## Revendications

1. Amortisseur de vibrations pour l'amortissement des vibrations du liquide présent dans un système hydraulique, en particulier dans un circuit de réglage hydraulique d'une boîte de vitesses d'un véhicule automobile, doté d'un élément amortisseur déformable élastiquement (3 ; 17 ; 31) disposé dans un évidement (11 ; 25 ; 37) d'un carter, le carter (9 ; 24 ; 34) étant pourvu d'un orifice pour l'amenée d'un liquide pressurisé vers l'élément amortisseur,
**caractérisé en ce que** le carter (9 ; 24 ; 34) dispose d'un orifice compensateur de pression (13 ; 28 ; 40) et **en ce que** l'amortisseur de vibrations (1) contient un élément d'étanchéité (7 ; 21 ; 32) lequel - en cas de défaillance de l'élément amortisseur (7 ; 21 ; 32) - ferme l'orifice compensateur de pression (13 ; 28 ; 40) assurent ainsi le fonctionnement du système hydraulique.

2. Amortisseur de vibrations selon la revendication 1, **caractérisé en ce que** l'orifice d'amenée du liquide pressurisé vers l'élément amortisseur (3 ; 17 ; 31) est conçu en forme de clapet (12 ; 27 ; 36).

3. Amortisseur de vibrations selon une des revendications 1 ou 2, **caractérisé en ce que** l'élément d'étanchéité (7 ; 21 ; 32) et/ou l'élément amortisseur (3 ; 17 ; 31) sont disposés de façon mobile dans l'évidement (11;25;37).

4. Amortisseur de vibrations selon les revendications 1, 2 ou 3, **caractérisé en ce que** l'orifice d'amenée du liquide pressurisé et l'orifice compensateur de pression (13 ; 28 ; 40) sont essentiellement disposés sur les faces frontales opposées de l'évidement (11 ; 25 ; 37) et **en ce que** l'élément d'étanchéité (32) est disposé à proximité de l'orifice d'amenée du liquide pressurisé et **en ce que** l'élément amortisseur (31) est disposé à proximité de l'orifice compensateur de pression (40) dans l'évidement (37).

5. Amortisseur de vibrations selon les revendications 1, 2, 3 ou 4, **caractérisé en ce que** l'élément d'étanchéité est essentiellement conçu en forme de piston cylindrique (32) et l'évidement (37) en forme d'alésage de piston (41), et **en ce que** un piston (32) est guidé dans le sens axial et de façon coulissante dans un alésage de piston (41), et **en ce que** entre l'enveloppe cylindrique du piston (32) et la paroi interne cylindrique de l'alésage du piston (41) est assurée une parfaite étanchéité.

6. Amortisseur de vibrations selon la revendication 5, **caractérisé en ce que** le piston (32) dispose, sur au moins une face frontale, d'un évidement (33) pour le centrage de l'élément amortisseur (31).

7. Amortisseur de vibrations selon les revendications 5 ou 6, **caractérisé en ce que** l'élément amortisseur (31) est conçu en forme de sphère et **en ce que** le diamètre de la sphère est inférieur au diamètre du piston (32) ou de celui de l'alésage du piston (41).

8. Amortisseur de vibrations selon les revendications 5, 6 ou 7, **caractérisé en ce que** le piston (32) et le carter (34) sont composés de matériaux ayant essentiellement le même coefficient de dilatation thermique.

9. Amortisseur de vibrations selon la revendication 8, **caractérisé en ce que** le piston (32) est composé d'une matière plastique et le carter (34) d'aluminium.

10. Amortisseur de vibrations selon une des revendications précédentes, **caractérisé en ce que** l'élément amortisseur (31) est composé d'un élastomère.

11. Amortisseur de vibrations selon les revendications 1, 2 ou 3, **caractérisé en ce que** l'élément amortisseur (3 ; 17) est disposé à proximité de l'orifice d'amenée du liquide pressurisé et l'élément d'étanchéité (7 ; 21) à proximité de l'orifice compensateur de pression (13 ; 28) dans l'évidement (11 ; 25).

12. Amortisseur de vibrations selon la revendication 1, **caractérisé en ce que** l'élément amortisseur (3 ; 17) dispose d'un élément (5 ; 19) réalisé essentiellement à cylindre creux et étant déformable élastiquement avec une face frontale essentiellement ouverte et une face frontale fermée pour l'absorption du liquide dans l'espace intérieur (8 ; 23) de l'élément amortisseur (3 ; 17), et **en ce que** l'élément amortisseur (7 ; 21) est conçu comme élément élastique et essentiellement en forme discoïdale, torique, de panneau, conique, de calotte, ou similaire et **en ce qu'**il est disposé essentiellement sur la face extérieure de l'extrémité fermée de l'élément amortisseur (3 ; 17).

13. Amortisseur de vibrations selon la revendication 12, **caractérisé en ce que** l'orifice en forme conique ou de calotte de l'élément d'étanchéité (7 ; 21) est orienté vers la face frontale ouverte de l'élément amortisseur (3 ; 17).

14. Amortisseur de vibrations selon les revendications 12 ou 13, **caractérisé en ce que** l'élément d'étanchéité (7) présente sur son bord extérieur radial une lèvre d'étanchéité essentiellement circonférentielle, laquelle, lors du fonctionnement de l'élément amortisseur (3) plaque contre la paroi intérieure de l'évidement (11) et laquelle divise l'évidement (11) - dans le sens d'écoulement et vu à partir du clapet (12) vers l'orifice compensateur de pression (13) - respectivement en un espace (15 ; 16) en amont et un espace en aval de la lèvre d'étanchéité (7).

15. Amortisseur de vibrations selon la revendication 14, **caractérisé en ce que** la lèvre d'étanchéité présente une forme elliptique.

16. Amortisseur de vibrations selon la revendication 14, **caractérisé en ce que** la lèvre d'étanchéité (7) est conçue essentiellement en forme circulaire, et **en ce que** le diamètre extérieur de la lèvre d'étanchéité (7) - l'élément amortisseur (3) étant à l'état non monté - est supérieur au diamètre intérieur de l'évidement (11) essentiellement cylindrique, et **en ce que** la lèvre d'étanchéité (7) dispose d'au moins un orifice de passage (14) pour la compensation de pression des deux espaces (15 ; 16) de l'évidement (11) en amont et en aval de la lèvre d'étanchéité (7).

17. Amortisseur de vibrations selon la revendication 16, **caractérisé en ce que** le passage (14) est conçu et l'élasticité de la lèvre d'étanchéité (7) est choisie d'une telle manière que - en cas de défaillance de l'élément amortisseur (3) - la lèvre d'étanchéité forme par la pressurisation unilatérale du liquide (P) dans l'espace (15) en amont de la lèvre d'étanchéité (7) conjointement avec la paroi intérieur de l'évidement (11) enveloppant l'élément amortisseur (3) un joint circonférentiel.

18. Amortisseur de vibrations selon les revendications 11 ou 12, **caractérisé en ce que** l'élément d'étanchéité (21) est conçu comme plateau élastique et essentiellement discoïdal et **en ce qu'**il est lié au centre de l'élément amortisseur (17).

19. Amortisseur de vibrations selon la revendication 18, **caractérisé en ce que** l'élément d'étanchéité (21) - pendant le fonctionnement normal de l'amortisseur de vibrations - ne touche pas la paroi intérieure de l'évidement (25), de manière à ce que - vu dans le sens d'écoulement - l'espace (30) en amont de l'élément d'étanchéité (21) est connecté avec l'espace en aval de l'élément d'étanchéité et avec l'orifice compensateur de pression (28), et **en ce que** - en cas de défaillance - l'élément d'étanchéité (21) ferme, par la pressurisation unilatérale du liquide, l'orifice compensateur de pression (28), sachant que l'élément d'étanchéité (21) doit être - au moins sur sa partie extérieure radiale - déformable élastiquement et qu'il doit pouvoir être serré contre la face d'étanchéité annulaire de l'évidement (25).

20. Amortisseur de vibrations selon une des revendications 1 à 10, **caractérisé en ce que** l'élément d'étanchéité (32) et l'élément amortisseur (31) sont conçus comme des pièces séparées.

21. Amortisseur de vibrations selon une des revendications 11 à 19, **caractérisé en ce que** l'élément d'étanchéité (7 ; 21) et l'élément amortisseur (3 ; 17) forment une pièce unique.
